# EUROPEAN PATENT SPECIFICATION

(11) **EP 1 788 885 B1**
(45) Date of publication and mention of the grant of the patent: **25.03.2009**
(21) Application number: 05776759.2
(22) Date of filing: 12.08.2005
(51) Int. Cl.: A23D 7/00, A23D 7/02

(54) **PROCESS FOR THE PREPARATION OF AN OIL IN WATER EMULSION COMPRISING AN OIL COMPRISING UNSATURATED FATTY ACID RESIDUES**
HERSTELLUNGSVERFAHREN FÜR EINE ÖL-IN-WASSER-EMULSION MIT EINEM ÖL MIT UNGESÄTTIGTEN FETTSÄUREN
PROCEDE DE PREPARATION D'UNE EMULSION HUILE DANS EAU COMPRENANT UND HUILE CONTENANT DES ACIDES GRAS INSATURÉS

(30) Priority: 23.08.2004 EP 04077388
(43) Date of publication of application: 30.05.2007
(73) Proprietor: Unilever N.V., 3013 AL Rotterdam (NL); Unilever PLC, London EC4Y 0DY (GB)
(72) Inventor: SCHREIBER, Regina, c/o Unilever R & D Vlaardingen, NL-3133 AT Vlaardingen (NL); DANIELS, S. C., c/o Unilever Bestfoods Deuts. GmbH, 87432 Kempten (DE)
(74) Representative: Joppe, Hermina Laura Petronella
(86) International application number: PCT/EP2005/008799
(87) International publication number: WO 2006/021334

(56) References cited:
- EP-A- 0 386 336
- EP-A- 0 897 671
- WO-A-96/38047
- WO-A-99/51105
- DE-A1- 3 907 676
- US-A- 3 490 919
- US-A- 3 749 583
- US-A- 5 104 679
- DATABASE WPI Section Ch, Week 199624 Derwent Publications Ltd., London, GB; Class D13, AN 1996-233270 XP002318155 & JP 08 089167 A (NIPPON OILS & FATS CO LTD) 9 April 1996 (1996-04-09)

## Description

### Field of the invention

The invention relates to oil in water emulsions which are suitable for use as a table spread and wherein the oil phase comprises an oil containing unsaturated fatty acid.

### Background to the invention

The beneficial health aspects of unsaturated fatty acids and especially polyunsaturated fatty acids are well known. Polyunsaturated fatty acids are fatty acids comprising at least 2 unsaturated carbon carbon bonds. Of the naturally occurring polyunsaturated fatty acids (PUFAs) especially n-3 polyunsaturated fatty acids and in particular eicosapentaenoic acid (EPA) and docosahexaenoic acid (DHA) are well known for their health benefits. These fatty acids may be obtained from fish oil. One of the known disadvantages of these fatty acids is their susceptibility to oxidation, leading to the formation of reactive oxygen species and the development of off flavour in food products comprising PUFAs.

In the art it has been suggested to reduce the oxidation of unsaturated fatty acids by including an antioxidant in the formulation. A well known anti oxidant for this application is EDTA. However the addition of antioxidants such as EDTA is subject to the requirement to declare such ingredients on the ingredient list. Also it contravenes the naturalness perception that consumers highly appreciate these days.

EP-A-0386336 discloses mayonnaise-type emulsions with 10-40 wt% fat, 40-70 wt% water and 20-30 wt% of other compounds. The emulsions are prepared by dispersing a first part of the fat in the water phase where after the water-soluble compounds are mixed in. Then the second part of fat is admixed after which the resulting emulsion is acidified.

DE-A-3907676 discloses low fat margarine. Margarines are fat continuous products. Furthermore the fats used herein are all hardened vegetable fat or butter with very high levels of saturated fatty acids.

WO-A-97/08956 discloses a water continuous acidified edible spread wherein part of the dairy fat has been replaced by a vegetable fat. The saturated fatty acid content in the fat is preferably below 45 wt%, more preferred below 30 wt%. The process that is used in the preparation of these compositions comprises the pasteurization of the aqueous phase and fat phase ingredients, followed by fermentation , homogenization and fill into containers.

We found that the inclusion of (poly)unsaturated fatty acids in acidified water continuous products wherein the fat is added before the acidification step leads to products with a strong off flavour due to oxidation of the (poly)unsaturated fatty acids.

Therefore it is an object of the current invention to provide a water continuous product comprising unsaturated fatty acids which is not subject to oxidation but remains with good taste and flavour without the need to add an antioxidant.

We have surprisingly found that stable oil in water emulsions can be prepared by adding the oil containing unsaturated fatty acid as late as possible in the process, just before the last homogenization and heat treatment step.

### Summary of the invention

Accordingly in a first aspect the invention relates to a process for preparing an edible oil in water emulsion comprising from 5 to 40 wt% oil wherein the oil comprises 40 to 90 wt% unsaturated fatty acid residues based on the total weight of the oil, and 10 to 60 wt% saturated fatty acid residues based on the total weight of the oil, the process comprising the steps of
a) providing an aqueous phase comprising a first oil wherein the amount of unsaturated fatty acid residues in this oil is less than 35% on total weight of this oil in the aqueous phase,
b) admixing this aqueous phase with further ingredients other than oil,
c) acidifying the composition of step b),
d) adding a second oil composition comprising unsaturated fatty acids to the acidified composition of step c),
e) subjecting the mixture of step (d) to homogenization and optionally a pasteurization or sterilization treatment,
f) filling the composition in packaging immediately after step (e),
g) cooling to storage temperature.

The invention further relates to products obtainable by this process.

### Detailed description of the invention

The invention relates to a process for preparing an oil in water emulsion. These emulsions are preferably textured emulsions which means they are spoonable or spreadable. This is evidenced by a Stevens value hardness of from 10 to 500 g at 10 °C, measured according to the method described in the examples.

The emulsion prepared by the process according to the invention is suitable for use as a table spread, dip, cooking sauce, spoonable product, sandwich spread, (mayonnaise type) and similar applications.

In the context of the invention, the terms oil and fat are used interchangeably.

The process starts with providing an aqueous phase comprising a first oil. This first oil may be dairy fat or a vegetable oil or a combination but is preferably low in unsaturated fatty acid content. The amount of unsaturated fatty acid residues in the first oil is less than 35% on total weight of the oil in this aqueous phase.
The total oil level of the first oil in the starting aqueous phase is preferably from 2 to 30 wt%, more preferred from 5 to 20 wt% on total weight of the starting aqueous phase.

Preferably the aqueous phase is selected from the group comprising water, milk, skim milk, dairy cream, non-dairy cream, butter milk, acidified cream, yoghurt, quark or a combination thereof.

Most preferred the aqueous phase is prepared from a combination of dairy cream and a low fat aqueous composition such as milk, skim milk, or water.
Preferred protein sources for the aqueous phase are butter milk powder and skim milk powder.

In a next step (b), the aqueous phase is admixed with further ingredients which are commonly included in a spoonable or spreadable oil in water emulsion. The further ingredients in step (b) are preferably selected from the group comprising protein, thickener, emulsifier, salt, coloring agent, flavoring agent, vitamins, minerals or a combination thereof. It is highly preferred to include emulsifiers and thickeners to provide texture and stability to the final oil in water emulsion.

Optionally the process includes a first heating step such as pasteurization to a temperature of from 75 to 90 °C. This heating step is preferably carried out after the aqueous phase and further ingredients have been mixed but may also be carried out to the separate product ingredient streams before they are admixed.

Suitable thickeners are preferably selected from the group comprising locust bean gum, guar gum, gelatin, starch, fibres such as inulin, carrageenan, xanthan gum, alginate, pectin or a combination thereof. The amount of thickener is preferably from 0.1 to 10 wt%.

Suitable emulsifiers are preferably selected from the group comprising monoglycerides, diglycerides, phospholipids such as lecithin, polyethylene glycols, sorbitan monostearate and combinations thereof.

Suitable proteins to include in this step are for example whey protein, casein, soy protein, rice protein, lupine protein, pea protein or a combination thereof.

The mixing of the ingredients in step (b) may be carried out in any suitable way. In a preferred process the ingredients are subjected to a homogenization treatment to ensure a homogeneous distribution of all ingredients in a stable way is obtained.

After mixing in step (b) the composition is acidified. Acidification may be carried out chemically or microbiologically. It is preferred that the acidification is done via microbiological acidification because this improves the flavor of the resulting products. When microbiological acidification is applied, the acidification is preferably stopped by heating to a temperature of at least 60 °C, preferably 60 to 70 °C. Alternatively microbiological acidification may also be stopped by cooling down below the "growth temperature" of the microorganism.

The acidification is preferably carried out until a pH of from 4 to 5.8 is reached, more preferably from 4.2 to 5.2.

Following the acidification, in step (d) a second oil composition comprising unsaturated fatty acids is mixed with the aqueous phase. The unsaturated fatty acids may be added as such or may be part of triglycerides. The unsaturated fatty acids of the oil in step (d) are preferably part of triglycerides.
It is highly surprising that this late addition of oil leads to stable products with the desired firmness. As suggested in WO-97/08956 the preferred prior art process is the inclusion of oil in the starting mixture such that the oil is present during the homogenization and acidification treatment during which treatments the product structure was believed to be built. We have now found that the late addition of oil also leads to stable, firm products.

The second oil that is added in step (d) is characterised by a fatty acid composition which is such that in combination with any first oil already present in the aqueous phase, the requirements of the final oil in water emulsion are met. The combination of the first oil and the second oil, i.e. final oil composition, is characterised by an amount of unsaturated fatty acid residues based on the total weight of the final oil of from 40 to 90 wt%, preferably 40 to 80 wt%, and the amount of saturated fatty acid residues based on the total weight of the final oil is 10 to 60 wt%, preferably 20 to 60 wt%. In preferred emulsions the final oil comprises 10 to 70 wt% polyunsaturated fatty acid residues on total weight of the oil in the emulsion.

The second oil that is admixed in step (d) of the process preferably comprises from 35 to 95 wt% unsaturated fatty acids on total fat, more preferred from 50 to 90 wt% unsaturated fatty acid residues. Preferably the fatty acids are esterified with glycerol to form triglycerides. These fatty acids are preferably part of triglycerides. This oil may be a single oil or a blend of oils. Examples of suitable oils to add at this stage of the process are palm oil, palm kernel oil, rapeseed oil, (high oleic) sunflower oil, soy bean oil, linola oil, linseed oil, olive oil, fish oil, allanblackia oil, pentedesma oil, or a combination thereof. Also modified compositions of these oils such as those compositions subjected to hydrogenation, esterification, fractionation, interesterification, blending, are suitable for addition at this stage provided some unsaturated fatty acid is present in the oil composition.

It is preferred that the oil added in step (d) is a liquid oil at room temperature but optionally the oil is a blend of a so called hardstock fat which is solid at room temperature, and a liquid oil.

Optionally with the oil other ingredients are added such as flavour compositions.

After the addition of the oil comprising unsaturated fatty acid it is preferred that the mixture is as soon as possible filled into packaging material and stored at a temperature below 25 °C, preferably a temperature from 0 to 10 °C.

Therefore it is preferred that after step (d) extensive heat treatment and further processing are avoided. However there is a need to mix the oil homogeneously with the aqueous phase and therefore the mixture of step (d) is homogenised. Optionally the mixture is subjected to pasteurization or sterilization before filling.

The resulting products are surprisingly stable and do not quickly form off flavour during storage.

In a preferred embodiment, the oil in water emulsion that is prepared is essentially free of antioxidant such as EDTA. The presence of some antioxidant that is naturally present in the ingredients is tolerable, especially because usually such ingredients do not require a declaration on pack. The "essentially free of antioxidant" therefore primarily refers to the added antioxidant which would require declaration on pack.

Optionally a low amount of antioxidant, preferably a natural antioxidant such as tocopherol, is added to further improve the product properties.
The term "essentially free of" means that the level of antioxidants is below 0.1 wt%.

### Description of figures:

**Figure 1****:** Mean scores among panelists for odour attributes (the asterix denotes significantly different).
**Figure 2****:** Mean scores among panelists for positive taste attributes (the asterix denotes significantly different).
**Figure 3****:** Mean scores among panelists for taste intensity and negative taste attributes (the asterix denotes significantly different).
**Figure 4****:** Mean scores among panelists for after-taste attributes (the asterix denotes significantly different).

The invention is illustrated by the following example.

### Examples

### General

Determination of Stevens value hardness (g).
Stevens value is analysed with a Texture Analyser by TA instruments using the following parameters:
Temperature: 10 °C
Probe: cylinder, diameter 12.7 mm
Penetration depth: 20 mm
Velocity: 1.0 mm/s

### Example 1:

An oil in water emulsion with the composition shown in table 1 was prepared.

**Table 1**

| | **% [w/w]** |
|---|---|
| | |
| Skim milk | 53 |
| Cream (40% fat) | 26.8 |
| Gelatine | 0.700 |
| Thermophilic culture mix | 4,000 |
| Fresh cheese | 1.000 |
| Whey protein powder | 1.750 |
| Locust bean gum | 0.400 |
| Salt | 0.300 |
| Beta-Carotene, liquid, oil-soluble | 0.010 |
| Fat blend with SAFA 34%, MUFA 47%, PUFA 19%, | 11.000 |
| flavouring | 0.05 |
| Water | Up to 100% |

The products were prepared by the following process.

To the cream composition (40%fat) the milk was added. The ingredients were mixed in a mix tank at a temperature of about 50°C. Whey powder, locust bean gum and salt were added to the mixture. The composition was pasteurized at 85°C for 20 minutes, and cooled down to 44°C. Thereto, about 0.7 kg of gelatin was added, after which homogenization at 200 bar took place. To the homogenized composition 0.4 kg of a yoghurt culture was added, whereafter the fermentation was allowed to proceed until a pH of about 4.8 was reached. The fermentation was stopped by heating the mixture to 64°C. To the obtained composition, the vegetable fat blend was added in the form of a liquid at a temperature of 60°C. The obtained product was heated, homogenized at 300 bar, and subsequently heated further to a temperature of 75°C for filling tubs. The product was cooled down to below 10°C and stored at chill temperature.

The products had a total fat content of 22wt%. The saturated fatty acid content was 45%, monounsaturated fatty acid content was 36% and polyunsaturated fatty acid content was 14% on total oil.
The resulting products were characterized by a Stevens value of 150 g at 10°C after a storage time of 48 hours.
After at least 63 days of storage at a temperature of 10°C, the products did not show any off flavour development.

### Example 2:

Comparison of products wherein the unsaturated fat was added before and after the acidification step.

Two sets of spreads were compared that only differ by the moment of addition of the fat blend in the process. Two batches of spreads were produced on the same day, with the same formulation, the same ingredients and the same process, apart for the moment of unsaturated fat addition. They were stored under the same conditions for the same amount of time, and were compared to each other by sensory evaluation (expert panel).

**Table 1: Composition table:**

| **Ingredient** | **%** |
|---|---|
| Fat Phase | |
| Sunflower oil | 22 |
| B-carotene fatsol (1% sol in SF) | 0.03 |

| Dairy phase | |
|---|---|
| Gelatin 250 bloom | 0.7 |
| Nutrilac QU6560 | 1.75 |
| SMP high heat | 6.25 |
| LBG Fleur M175 | 0.3 |
| Salt | 0.3 |
| P-sorbate | 0.1 |
| 50% Citric Acid | 0.6 |
| Flavour (Ebrom 0,02 cast volla 16,5) | 0.1 |
| demi-water | 67.87 |
| Total | 100% |

The two samples differ from each other only by the moment of addition of fat during processing (see Chart 1). The process is typical for spreads and was conducted on lab scale (3 kg batch).

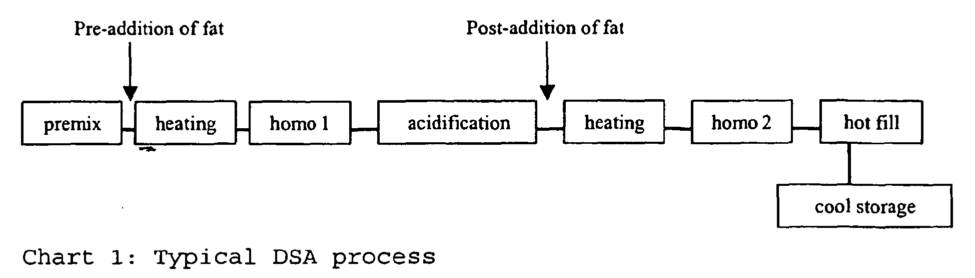

After filling, the samples were stored for 2 weeks at elevated temperatures (10°C) in the dark until their sensory evaluation.

The Spreads were evaluated by a panel trained to characterise the products using an attribute list, and score the perceived attributes and intensities on a 15-point scale. The panellists directly compared the two products on an individual basis and rated both products on the standard attribute list on paper. After rating both products a brief discussion about the samples took place in order to identify any missing attributes to describe product differences. An analysis of variance (ANOVA) with product and panellist as factors was performed to see if there were statistically significant differences between the products (p<0.05) on some attributes.

### Odour profile

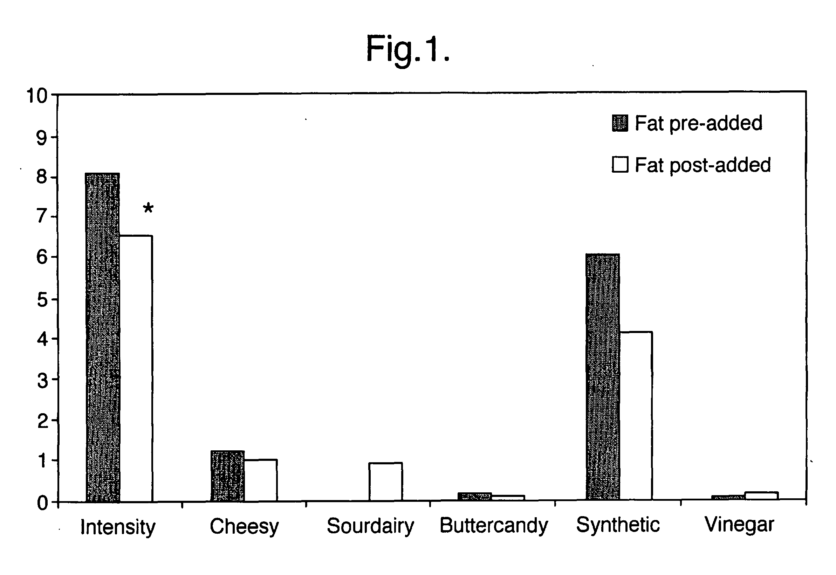

The odour profile of the two samples were described using six attributes, three of them are considered as positive descriptors (sourdairy, buttercandy and cheesy), two are negative attributes (vinegar and synthetic), and odour intensity; the mean scores among panellists for each attribute are shown in figure 1.

The sample with pre-added fat exhibited higher mean scores for the synthetic odour. The sample with pre-added fat was perceived as more oxidised than the sample with post-added fat. The sample with pre-added fat scored zero for the attribute sour dairy odour, while the sample with post-added fat on the opposite-showed a non-negligible mean score for this attribute. Therefore the sample with post-added fat possesses some positive flavours, and was perceived somewhat fresher than the sample with pre-added fat.

### Taste and after-taste profile

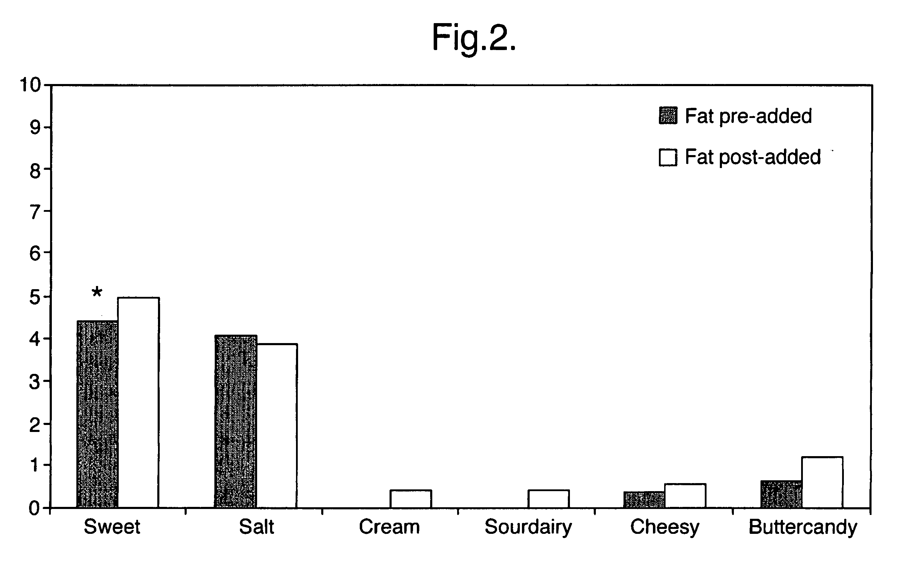

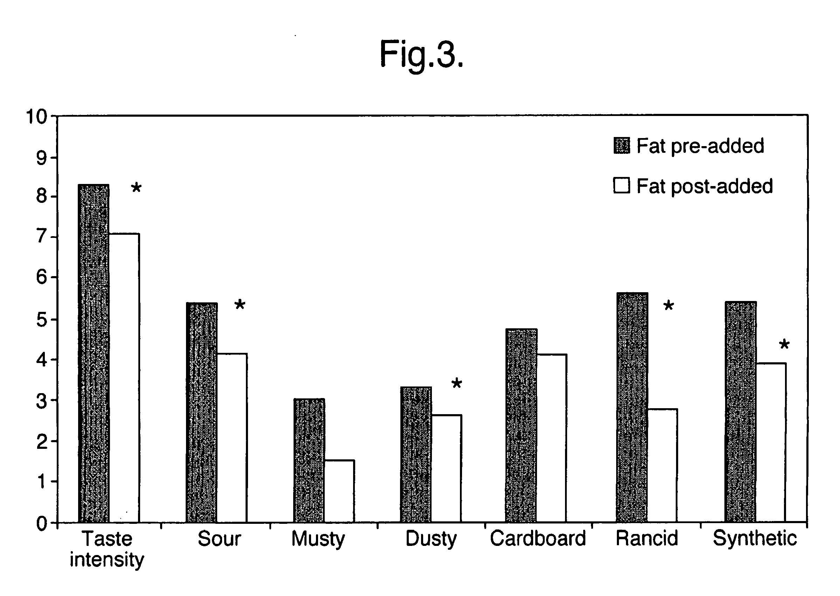

The taste profile of the two samples were described using thirteen attributes, 6 considered as positive attributes and 6 considered as negative, plus the taste intensity; the mean scores for the positive taste attributes are shown in figure 2, and for taste intensity and negative attributes in figure 3:

The output of the ANOVA states that the attribute sweet taste is significantly discriminative between the products, with the post added samples being sweeter than the pre-added sample. For the other attributes, although not statistically relevant, all attributes apart for salt exhibit greater scores for the sample with post-added fat as compared to the sample with pre-added fat. In particular the scores for the attributes cream and sour-dairy are 0 for the sample with pre-added fat, meaning that the sample doesn't present any dairy positive flavours anymore, whereas the sample with post-added fat is still perceived as creamy and sour-dairy.

The attributes for negative taste showing significantly different scores as assessed by the ANOVA are taste intensity, sour taste, dusty taste, rancid taste and synthetic taste. All negative attributes, the scores of the sample with pre-added fat are higher than for the sample with post-added fat. The greatest differences between the products were described by the attributes rancid (5.7 and 2.8 for the sample with pre-added fat and the sample with post added fat, respectively), synthetic (5.5 and 3.9, respectively) and musty (3 and 1.5, respectively).

Rancid, sour, synthetic and cardboard are the attributes most contributing to the overall perception and may be hold responsible for the high taste intensity of the two samples and in particular of the sample with pre-added fat.

Overall it seems quite clear that the sample with pre-added fat is scoring higher on typical oxidation attributes (musty, dusty, cardboard, rancid, synthetic) as compared to the sample with post-added fat.

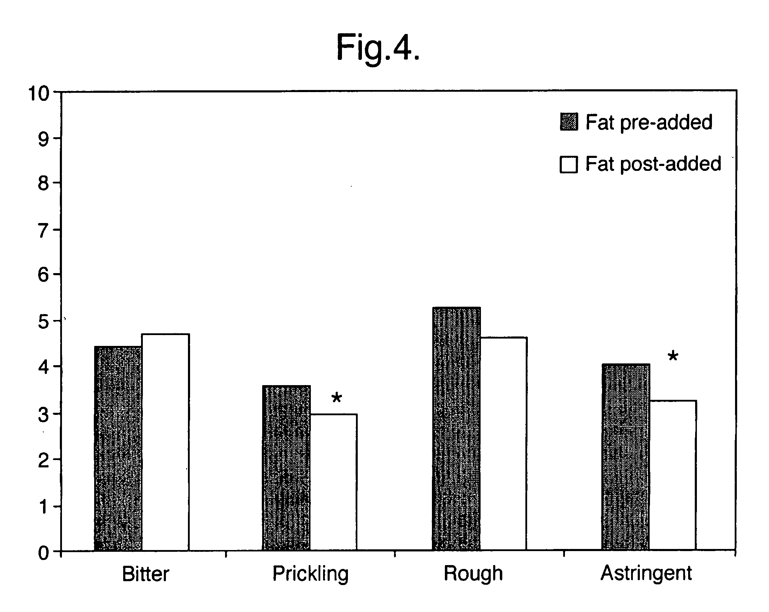

The after-taste profile of the two samples were described using four attributes, all considered rather negative; the mean scores for each after-taste attribute are shown in figure 4:

Of the four attributes used to describe the after-taste profile of the samples, two are statistically discriminative: the sample with post-added fat is significantly less prickling and less astringent.

### Conclusions

The sample with pre-added fat is clearly being oxidised. From the purely statistical point of view, the sample with post-addition of fat results in:
- Odour: less intense.
- Taste: less intense, more sweet, less sour, less dusty, less rancid, less synthetic.
- Aftertaste: less astringent, less prickling.

The overall trend among the attributes scores is that the sample with post-added fat is less oxidised and presents some positive flavours, whereas the sample with pre-added fat is perceived as strongly oxidised, proving the benefit of post-addition of fat.

## Claims

1. Process for preparing an edible oil in water emulsion comprising from 5 to 40 wt% oil wherein the oil comprises 40 to 90 wt% unsaturated fatty acid residues based on the total weight of the oil, and 10 to 60 wt% saturated fatty acid residues based on the total weight of the oil,
the process comprising the steps of
a) providing an aqueous phase comprising a first oil wherein the amount of unsaturated fatty acid residues in this oil is less than 35%,
b) admixing this aqueous phase with further ingredients other than oil,
c) acidifying the composition of step b),
d) adding a second oil composition comprising unsaturated fatty acids to the acidified composition of step c),
e) subjecting the mixture of step (d) to homogenization and optionally a pasteurization or sterilization treatment,
f) filling the composition in packaging immediately after step (e),
g) cooling to storage temperature.

2. Process according to claim 1 wherein the unsaturated fatty acids of the second oil in step (d) are part of triglycerides.

3. Process according to any of claims 1-2 wherein the oil in the edible oil in water emulsion comprises 40 to 80 wt% unsaturated fatty acid residues based on the total weight of the oil in said emulsion.

4. Process according to any of claims 1-3 wherein the oil in the oil in water emulsion comprises 10 to 70 wt% polyunsaturated fatty acid residues on total weight of the oil.

5. Process according to any of claims 1-4 wherein the further ingredients in step (b) are selected from the group comprising protein, thickener, emulsifier, salt, colouring agent, vitamins, minerals or a combination thereof.

6. Process according to any of claims 1-5 wherein the aqueous phase is selected from the group comprising water, milk, skim milk, cream, acidified cream, butter milk, yoghurt, quark or a combination thereof.

7. Process according to any of claims 1-6 wherein the acidification is carried out until a pH of from 4 to 5.8 is reached, preferable from 4.2 to 5.2.

8. Process according to any of claims 1-7 wherein the oil in water emulsion that is prepared is essentially free of antioxidant.

## Patentansprüche

1. Verfahren zur Herstellung einer essbaren Öl-in-Wasser-Emulsion, die 5 bis 40 Gewichts-% Öl umfasst, wobei das Öl 40 bis 90 Gewichts-% ungesättigte Fettsäurereste, bezogen auf das Gesamtgewicht des Öls, und 10 bis 60 Gewichts-% gesättigte Fettsäurereste, bezogen auf das Gesamtgewicht des Öl, umfasst,
wobei das Verfahren die Schritte
a) Bereitstellen einer wässrigen Phase, die ein erstes Öl umfasst, wobei die Menge an ungesättigten Fettsäureresten in diesem Öl weniger als 35 % ist,
b) Vermischen dieser wässrigen Phase mit weiteren anderen Ingredientien als Öl,
c) Ansäuern der Zusammensetzung von Schritt b),
d) Zusetzen einer zweiten Ölzusammensetzung, die ungesättigte Fettsäuren umfasst, zu der angesäuerten Zusammensetzung von Schritt c),
e) Unterwerfen des Gemisches von Schritt d) einer Homogenisierung und gegebenenfalls einer Pasteurisierungs- oder Sterilisierungsbehandlung,
f) Füllen der Zusammensetzung unmittelbar nach Schritt (e) in eine Verpackung,
g) Kühlen auf Lagerraumtemperatur umfasst.

2. Verfahren gemäß Anspruch 1, wobei die ungesättigten Fettsäuren des zweiten Öls in Schritt (d) Teil von Triglyceriden sind.

3. Verfahren gemäß einem der Ansprüche 1-2, wobei das Öl in der essbaren Öl-in-Wasser-Emulsion 40 bis 80 Gewichts-% ungesättigte Fettsäurereste, bezogen auf das Gesamtgewicht des Öls in der Emulsion, umfasst.

4. Verfahren gemäß einem der Ansprüche 1-3, wobei das Öl in der Öl-in-Wasser-Emulsion 10 bis 70 Gewichts-% mehrfach ungesättigte Fettsäurereste, bezogen auf das Gesamtgewicht des Öls, umfasst.

5. Verfahren gemäß einem der Ansprüche 1-4, wobei die weiteren Ingredientien in Schritt (b) ausgewählt sind aus der Gruppe, bestehend aus Protein, Verdickungsmittel, Emulgator, Salz, Färbemittel, Vitaminen, Mineralstoffen oder einer Kombination davon.

6. Verfahren gemäß einem der Ansprüche 1-5, wobei die wässrige Phase ausgewählt ist aus der Gruppe, umfassend Wasser, Milch, Magermilch, Sahne, Sauerrahm, Buttermilch, Jogurt, Quark oder eine Kombination davon.

7. Verfahren gemäß einem der Ansprüche 1-6, wobei die Ansäuerung durchgeführt wird, bis ein pH von 4 bis 5,8, vorzugsweise von 4,2 bis 5,2, erreicht ist.

8. Verfahren gemäß einem der Ansprüche 1-7, wobei das Öl in der Öl-in-Wasser-Emulsion, die hergestellt wird, im Wesentlichen frei von Antioxidans ist.

## Revendications

1. Procédé de préparation d'une émulsion huile-dans-eau comestible comprenant de 5 à 40 % en poids d'huile, dans lequel l'huile comprend 40 à 90 % en poids de résidus d'acides gras insaturés par rapport au poids total de l'huile, et 10 à 60 % en poids de résidus d'acides gras saturés par rapport au poids total de l'huile,
le procédé comprenant les étapes consistant à :
a) fournir une phase aqueuse comprenant une première huile, la quantité de résidus d'acides gras insaturés dans cette huile étant inférieure à 35 %,
b) mélanger cette phase aqueuse avec des ingrédients supplémentaires autres que l'huile,
c) acidifier la composition de l'étape b),
d) ajouter une seconde composition d'huile comprenant des acides gras insaturés à la composition acidifiée de l'étape c),
e) soumettre le mélange de l'étape (d) à une homogénéisation et facultativement à un traitement de pasteurisation ou stérilisation,
f) introduire la composition dans un emballage immédiatement après l'étape (e),
g) refroidir à la température de stockage.

2. Procédé selon la revendication 1, dans lequel les acides gras insaturés de la seconde huile dans l'étape (d) font partie de triglycérides.

3. Procédé selon l'une quelconque des revendications 1 et 2, dans lequel l'huile dans l'émulsion huile-dans-eau comestible comprend 40 à 80 % en poids de résidus d'acides gras insaturés par rapport au poids total de l'huile dans ladite émulsion.

4. Procédé selon l'une quelconque des revendications 1 à 3, dans lequel l'huile dans l'émulsion huile-dans-eau comprend 10 à 70 % en poids de résidus d'acides gras polyinsaturés par rapport au poids total de l'huile.

5. Procédé selon l'une quelconque des revendications 1 à 4, dans lequel les ingrédients supplémentaires dans l'étape (b) sont choisis dans le groupe comprenant une protéine, un épaississant, un émulsionnant, un sel, un agent colorant, des vitamines, des minéraux ou l'une de leurs combinaisons.

6. Procédé selon l'une quelconque des revendications 1 à 5, dans lequel la phase aqueuse est choisie dans le groupe comprenant de l'eau, du lait, du lait écrémé, de la crème, de la crème acidifiée, du babeurre, du yaourt, de la caillebotte ou l'une de leurs combinaisons.

7. Procédé selon l'une quelconque des revendications 1 à 6, dans lequel l'acidification est réalisée jusqu'à l'atteinte d'un pH de 4 à 5,8, de préférence de 4,2 à 5,2.

8. Procédé selon l'une quelconque des revendications 1 à 7, dans lequel l'émulsion huile-dans-eau qui est préparée est essentiellement dépourvue d'antioxydant.
